Europäisches Patentamt

European Patent Office

Office européen des brevets

(19)

(11) EP 0 454 483 B1

## (12) EUROPEAN PATENT SPECIFICATION

(45) Date of publication and mention
of the grant of the patent:
**03.12.1997 Bulletin 1997/49**

(51) Int Cl.$^6$: **G06T 7/00**, H04N 5/232

(21) Application number: **91303795.8**

(22) Date of filing: **26.04.1991**

(54) **Movement vector detection device**

Bewegungsvektorauffindungsvorrichtung

Dispositif de détection de vecteur de mouvement

(84) Designated Contracting States:
**DE FR GB**

(30) Priority: **27.04.1990 JP 113952/90**

(43) Date of publication of application:
**30.10.1991 Bulletin 1991/44**

(73) Proprietor: **CANON KABUSHIKI KAISHA
Tokyo (JP)**

(72) Inventors:
- **Kondo, Toshiaki, c/o CANON K.K.
  Tokyo (JP)**
- **Sekine, Masayoshi, c/o CANON K.K.
  Tokyo (JP)**

(74) Representative:
**Beresford, Keith Denis Lewis et al
BERESFORD & Co.
2-5 Warwick Court
High Holborn
London WC1R 5DJ (GB)**

(56) References cited:
**WO-A-90/03619**

- **COMPUTER VISION GRAPHICS AND IMAGE
  PROCESSING. vol. 21, no. 2, February 1983,
  NEW YORK US pages 262 - 279 MASAHIKO
  YACHIDA 'determining velocity maps by
  spatio-temporal neighborhoods from image
  sequences'**

**Description**

BACKGROUND OF THE INVENTION

Field of the Invention

The present invention relates to a movement detection device, and more specifically, to a device which detects movement vectors from image signals.

Related Background Art

A method to detect movement vectors by image signal processing is the time-space gradient method which is described in J.O. Limb and J,A, Murply, "Measuring the Speed of Moving Objects from Television Signals", IEEE Trans. Com., Com-23, 4, pp. 474-487 (April 1975) and in others. In this time-space gradient method, the movement amount of each point is computed by the following basic formula:

$$\alpha = \Sigma_B \, d \cdot sign(g'x)/\Sigma_B |g'_x|$$

$$\beta = \Sigma_B \, d \cdot sign(g'y)/\Sigma_B |g'_y|$$

where "$\alpha$" and "$\beta$" represent the movement amounts in x and y directions, respectively; "d" represents the concentration difference among time-sequential images of one given point, namely, the time gradient; and "$g'_x$" and "$g'_y$" represent the space gradients in x and y directions, respectively, when the image is expressed as "g". And "$\Sigma_B$" means the computed grand total in a block and "sign( )" is the function which outputs the signal of "$g'_x$" and "$g'_y$".

In the conventional examples, the detection range has no limits, if the spacial concentration distribution of the input images is linear, that is, if the space gradient of the image concentration is constant. In practice, however, the spacial concentration distribution of image varies in random cycles, and therefore, the conventional method has the disadvantage of not being easily applicable to large movements.

An article in Computer Vision, Graphics and Image Processing, Vol.21, No.2, February 1983, New York, USA, pages 262-279 by Masahiko Yachida and entitled "Determining Velocity Maps by Spatio-Temporal Neighborhoods from Image Sequences" discloses detecting and predicting the speed and movement of an object from a motion vector. Specifically, D1 discloses the separate prediction of a velocity vector and a spatial intensity gradient, and averaging the velocity vector.

In accordance with the present invention there is provided a motion detection device as set out in claim 1.

Therefore, a concern of the present invention is to provide a movement vector detection device which solves the aforesaid disadvantage.

An embodiment of the present invention provides a movement vector detection device which has a wide detection range to images, the space gradient of which is not constant but changes randomly.

Another embodiment of the present invention provides a movement vector detection device that is capable of more accurately detecting the movement vector of images whose space gradient changes with time and is capable of being applied to large movement images, because, in the space gradient computation, the average space gradient is computed under given weights of the preceding image plane and the current image plane.

Other features and characteristics of the present invention will be made clear by the ensuing specifications and drawings.

BRIEF DESCRIPTION OF THE DRAWINGS

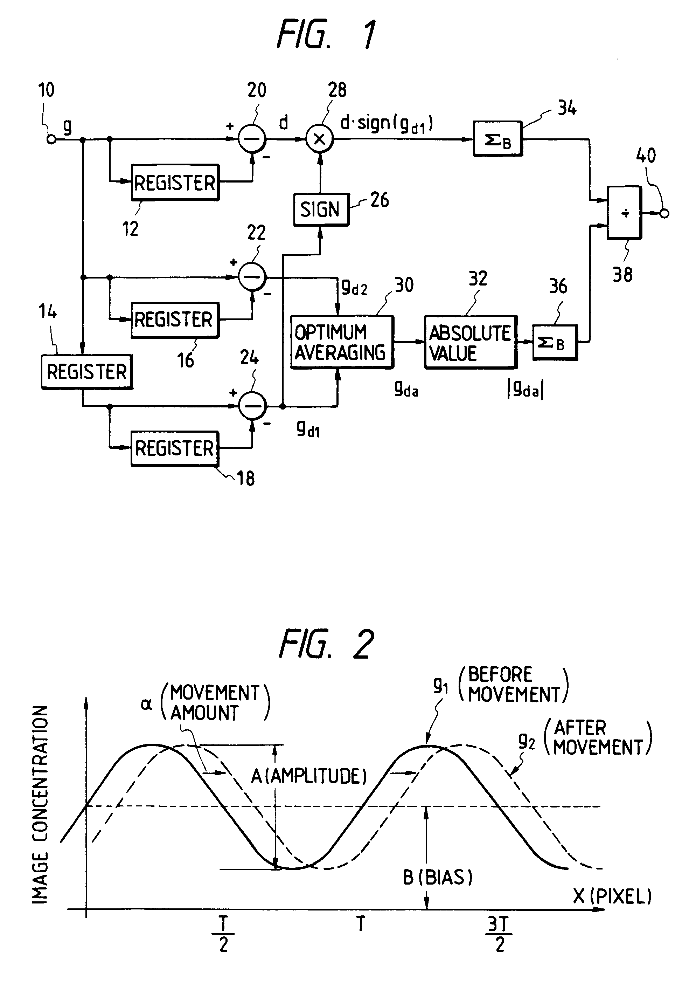

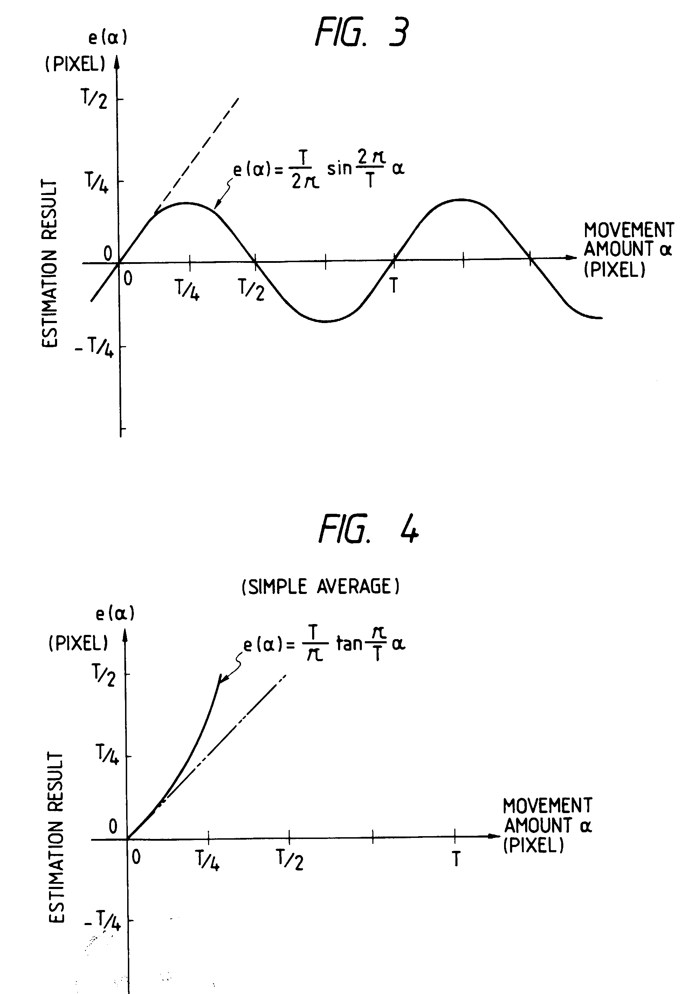

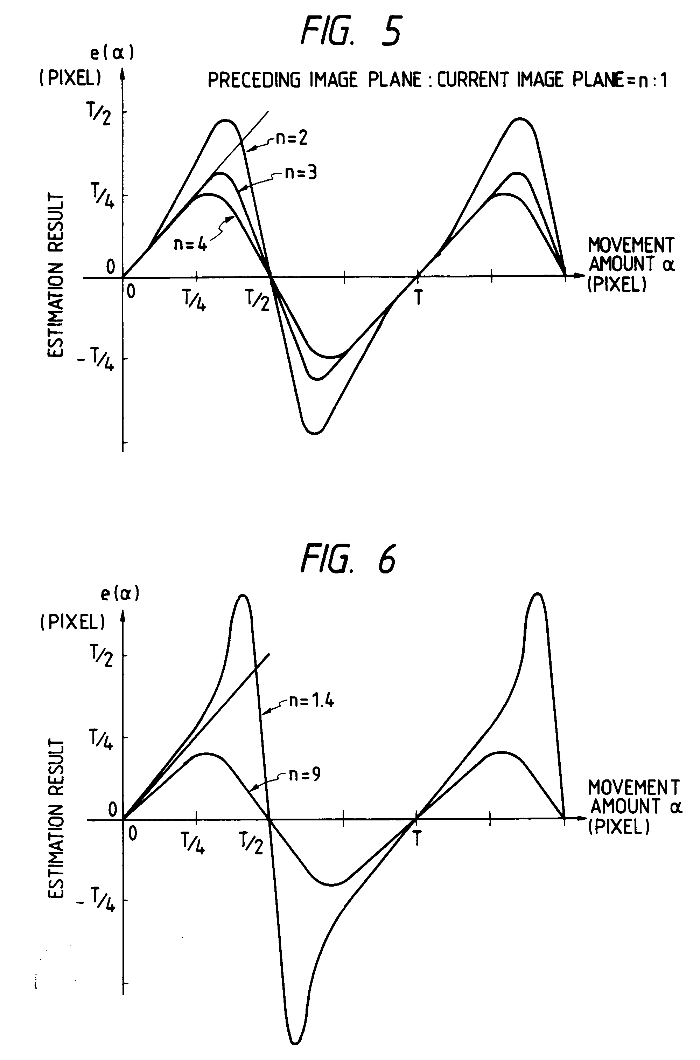

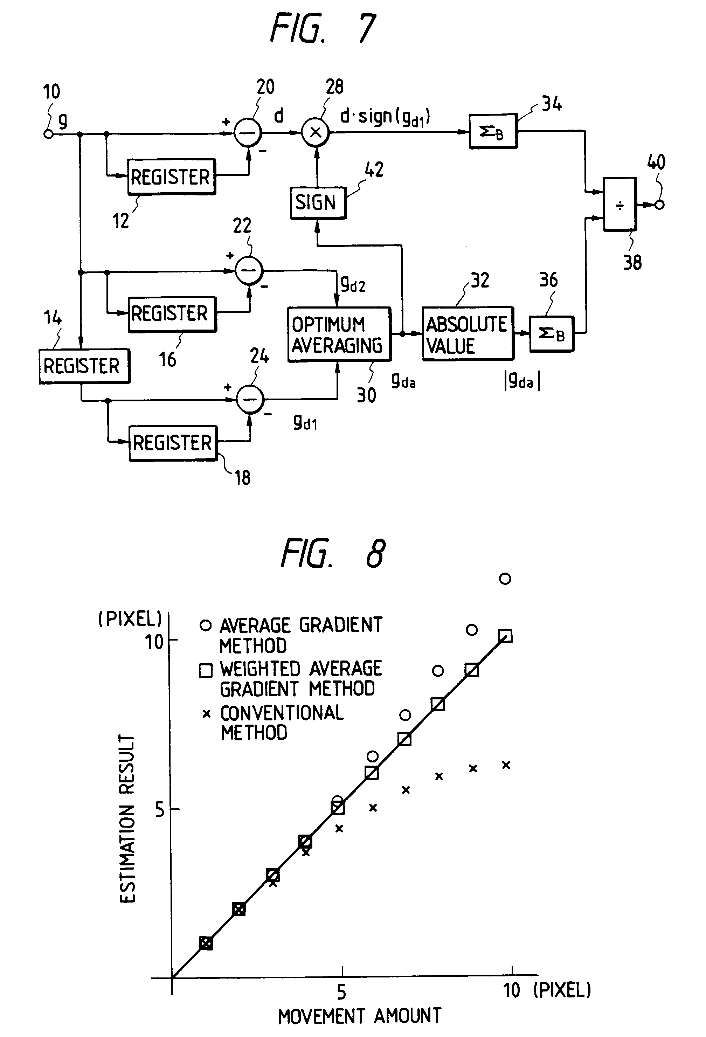

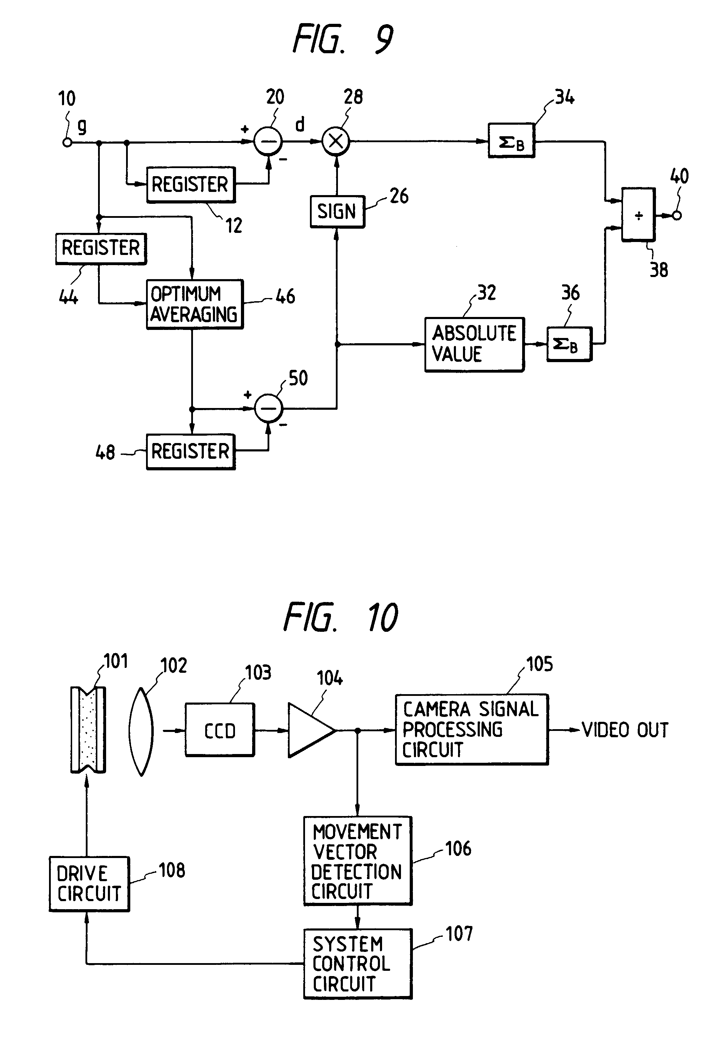

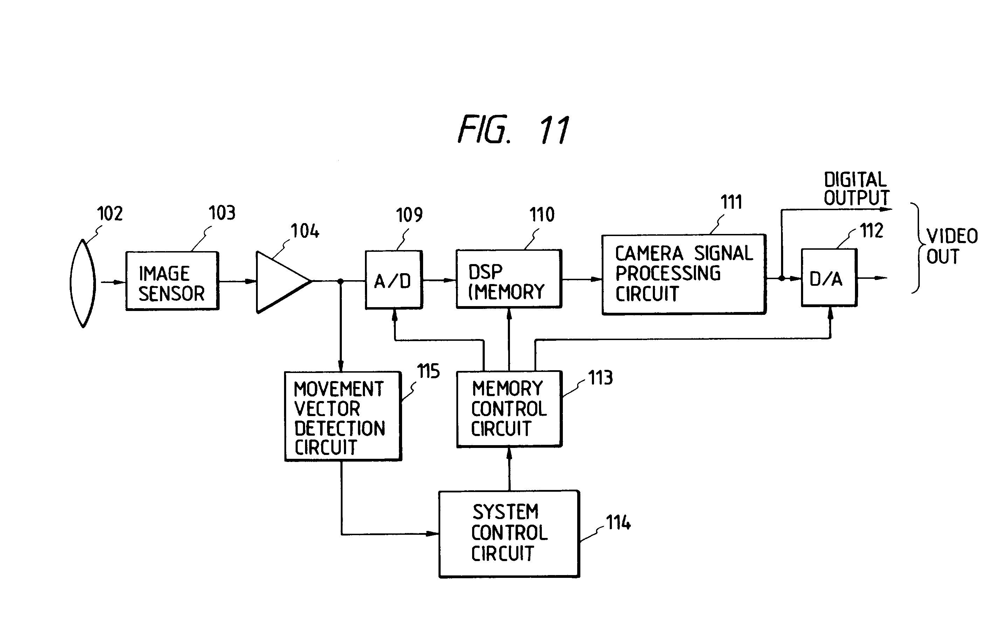

Figure 1 shows the block diagram of an embodiment of the present invention, Figure 2 shows the cross-section of an image pattern where the frequency is "T", Figure 3 shows the results of estimation when the movement amounts are estimated by the application of time-space gradient method to the frequency T pattern, Figure 4 shows the results of estimation by the average gradient method, Figure 5 shows the results of estimation by the embodiment of Figure 1, Figure 6 illustrates the effective range of weights, Figure 7 shows the block diagram of another embodiment of the present invention, Figure 8 compares the estimation results by a conventional example and the embodiment of Figure 7, Figure 9 shows the block diagram of a third embodiment of the present invention, and Figures 10 and 11 show the block diagrams of embodiments where the movement vector detection devices in the present invention are each applied to the image vibration adjustment devices.

DETAILED DESCRIPTION OF THE PREFERRED EMBODIMENTS

With reference to the drawings, embodiments of the movement vector detection devices of the present invention are explained below.

Figure 1 shows the block diagram of an embodiment of the present invention. 10 is the input terminal of image signals, 12 and 14 are the registers which memorize (that is, delay) the input signals for one field period (or one frame period); 16 and 18 are the registers which memorize (that is, delay) the input signals only for the scanning time of several pixels that are required for the operation of the space gradient of the image concentration distribution; 20, 22 and 24 are subtractors; 26 is the sign output circuit which outputs the signal showing the sign (positive, negative or zero) of the input signal (output of subtractor 24); 28 is the multiplier); 30 is the optimum averaging circuit which averages the two inputs after giving proper weights; 32 is the absolute value circuit which outputs the absolute value of the output signal of the optimum averaging circuit 30; 34 and 36 are the totalizing circuits which accumulate the data in the designated block for detection of the movement vector; 38 is the divider which divides the output of totalizing circuit 34 by the output of totalizing circuit 36; 40 is the output terminal of the signal which shows the image movement amount in horizontal or vertical direction.

An explanation of actions in Figure 1 is given as follows. The image signal "g" which is input to input terminal 10 is separated into three channels, and firstly, the concentration difference between the time sequential two field (or frame) image planes, that is, the time gradient "d", is computed by register 12 and subtractor 20. Secondly, the space gradient "$g_{d2}$" of the current image plane (field or frame) is computed by register 16 and subtractor 22, and thirdly, the space gradient "$g_{d1}$" of the preceding image plane (field or frame) is computed by register 18 and subtractor 24 by the use of the image signal of the preceding field (or frame) of register 14.

Optimum averaging circuit 30 gives the optimum weight to the space gradients "$g_{d1}$" and "$g_{d2}$" of between the preceding and current image planes and averages them. For example, if $g_{d1}$: $g_{d2}$ = 3:1, optimum averaging circuit 30 outputs an average value "$g_{da}$" which is expressed by:

$$g_{da} = (3/4)g_{d1} + (1/4)g_{d2}. \qquad (1)$$

Absolute value circuit 32 takes up the absolute value of the output "$g_{da}$" of optimum averaging circuit 30 and feeds it to totalizing circuit 36. Totalizing circuit 36 computes the total sum of the outputs "$|g_{da}|$" of absolute value circuit 32 in the block consisting of a prescribed number of pixels, and sends the total sum to the denominator input of divider 38.

Sign output circuit 26 outputs "+1" if the space gradient "$g_{d1}$" is positive, "0" if $g_{d1}$ is zero, and "-1" if $g_{d1}$ is negative, and multiplier 28 multiplies the output of sign output circuit 26 by the time gradient "d" (the output of subtractor 20). Thus, the time gradient in the direction of space gradient is obtained. And totalizing circuit 34 computes the total sum of the output of multiplier 28 for each block. The output of totalizing circuit 34 is sent to the numerator input of divider 38. Divider 38 divides the output of totalizing circuit 34 by the output of totalizing circuit 36. The result of division by divider 38 represents the movement amount in the direction of space gradient of each designated block, and the movement amount of each block in horizontal or vertical direction is obtained from output terminal 40.

Next, with reference to Figures 2 through 5, the optimum determination method and its effect at optimum averaging circuit 30 are explained. For the propose of simplification, the image concentration distribution is assumed as one of the one-dimensional sine curve, and its graph is shown in Figure 2. In Figure 2, the vertical axis shows the concentration value of the image, and the horizontal axis shows the position in the image plane. "A" represents the height of the sine curve, "B" represents the bias, "T" represents the cycle, "$g_1$" represents the image before movement, and "$g_2$" represents the image after it moved by "$\alpha$". The following can be said if the time-space gradient method is applied to the sine curve shown in Figure 2. When expressing the time gradient as "d(x)" and the partial derivative of $g_1$ in x direction (space gradient) as "$g\,d_1(x)$", then:

$$d(x) = g_1 - g_2$$

$$= A\{\sin \omega x - \sin \omega(x - \alpha)\} \qquad (2)$$

$$g_{d1}(x) = \partial g_1/\partial x = A\omega \cos \omega x \qquad (3)$$

where:

$$\omega = 2\pi/T$$

Consequently, the estimated movement amount "e($\alpha$)" is given from the aforesaid basic formula as:

$$e(\alpha) = \Sigma_B\, d(x)\cdot\text{sign}\,(g_{d1})/\Sigma_B|g_{d1}| \qquad (4)$$

$\Sigma_B$ corresponds to the total sum in the block computed by totalizing circuits 34 and 36. When estimating the movement amount "e($\alpha$)" in the case of the block size being equal to the pattern cycle "T".

$$e(\alpha) = (T/2\pi) \sin \omega\alpha$$

$$= (T/2\pi) \sin (2\pi\alpha/T) \qquad (5)$$

Figure 3 is the illustration of the above where the horizontal axis shows the movement amount "$\alpha$" of the pixel unit and the vertical axis represents the extimation result of the pixel unit.

Likewise, the estimation result when simply averaging the gradients of two field (or frame) images is:

$$e(\alpha) = (T/\pi) \tan (\pi a/T) \qquad (6)$$

This is illustrated in Figure 4. Of assuming the image as one of the sine curves, the average gradient becomes zero when the movement amount is T/2 and therefore the estimation results disperses at $\alpha$ = T/2, but such phenomena cannot take place in reality. Generally, some characteristics improvement is achieved by averaging the space gradients of the preceding and current field (or frame) images rather than by only using the space gradient of the preceding field (or frame) image which serves as the base.

Next, by the extension of the idea of averaging the space gradients, it is conceived that such averaging be done with optimum weighing. Normally, if the reference ratio of the space gradient of the base preceding field (or frame) image and the space gradient of the current field (or frame) is n:1, then the estimation result in this case is expressed by the following formula:

$$e(\alpha) = \frac{(n+1)^2 \sin \omega\alpha}{\omega(n^2 +2n \cos \omega\alpha+1)} \qquad (7)$$

where:

$$\omega = 2\pi/T$$

Formula (7) is equal to formula (5) when $n = +\infty$ and to formula (6) when n=1. Estimation results when n=2, 3 and 4 are illustrated in Figure 5. Comparison of it with Figures 3 and 4 shows that the detection range is considerably broadened, particularly when n=3.

Next, the effective range of n which is the reference specific gravity of the space gradient of the preceding image plane to the space gradient of the current image plane, is explained. If the conditions are such that, when the movement amount "$\alpha$" is $\pm T/8$, the error between the true value (namely $\pm T/8$) and the estimation result is no more than $\pm 5\%$, the range of reference specific gravity "n" for it to be effective for the weighing can be:

$$1.4 \leqq n \leqq 9$$

The estimation results when n = 1.4 and when n = 9 are shown in Figure 6.

When n = 1, that is, when the simple average gradient method is employed, the ratio of error to the true value when $\alpha = \pm T/8$ is 5.5%, and when n=∞, that is, when the conventional method which uses the space gradient of the preceding image plane only, an error of 10% occurs, but the use of weighted average gradient within the range of $1.4 \leqq n \leqq 9$ controls the error to no more than $\pm 5\%$. The foregoing is the result of mathematical explanation for the usefulness of the weighted average space gradient method, based on the assumption that the change of image concentration is one of the sine curves.

With reference to Figure 7, a second embodiment is explained. In the circuit of Figure 1, the sign of the space gradient of the preceding image plane was used in order to obtain the numerator of the estimation formula, but it is also possible to use the sign of the value after the weighed averaging of the space gradient, that is, the output of optimum averaging circuit 30 in Figure 1. In the latter case, the current image plane is referred to, not just for the magnitude of the space gradient but also for its sign, and improvement of characteristics can be expected. Figure 7 shows a circuit block diagram of such modified embodiment. 42 represents a sign output circuit having the same function as that of the sign output circuit 42 in Figure 1, and is different from Figure 1 in that the output of optimum averaging circuit 30 is used as input. Other elements are same as in Figure 1 and they are numbered in the same way. In other words, the system is structured in such a way that the current image plane is referred to not just for the magnitude of the space gradient but also for its signal.

Using the 256 x 256 x 1 (byte) image as an example, the conventional time-space gradient method, the average gradient method by which the space gradients are averaged simply with the weight ratio of 1:1, and the weighed average gradient method in accordance with the embodiment of Figure 7 are compared with respect to the image signals that have undergone low-pass filtering treatment. The results of comparison are shown in Figure 8. In Figure 8, "X" represents the estimation result by the conventional space time gradient method without averaging "○" represents the estimation result by the average gradient method, and "□" represents the estimation result by the present embodiment. The weight was made to be (preceding image plane) : (current image plane) = 3:1. It is clear that the detection range has been substantially enhanced in comparison with the other two methods.

Figure 9 shows a block diagram of yet another embodiment. The same elements as those in Figure 1 are numbered in the same way. 44 represents a register which gives the time lag for 1 field (or frame), 46 represents a similar optimum averaging circuit as optimum averaging circuit 30, 48 represents a register which gives the time lag for the scanning time of several pixels, and 50 represents a subtractor. Optimum averaging circuit 46 averages, under a proper weight, the current image signal from input terminal 10 and the preceding image signal from register 44. Register 48 and subtractor 50 computes the space gradient from the output of optimum averaging circuit 46, and the output of subtractor 50 is sent to sign output circuit 26 and absolute value circuit 32. The concentration difference "d" has been obtained by register 12 and subtractor 20, as was already explained hereinabove. Therefore, the same processing proceeds thereafter, and the movement amount signal is obtained from output terminal 40.

In the system of Figure 9, one register which gives the time lag for the scanning time of several pixesls in the system of Figure 1 or Figure 7 is not required, making it possible to simplify the hardware configuration by that much.

As is easily understandable from the aforesaid explanation, the present invention has the advantage of enhancing the detection range of movement vector, without substantial extension of circuits.

Figures 10 and 11 each show an example where each of the aforesaid movement vector detection circuits is applied to video camera as the vibration correction (anti-vibration) device.

Figure 10 shows an example which employs, as the anti-vibration unit, a movable top angle prism which optically corrects for the vibration by moving the light axis of the image lens. In Figure 10, 101 represents a movable top angle prism which moves the direction of light axis of the image lens system, that is, the top angle thereof, and which, by way of example, is a pair of parallel glass sheets having a silicon-based fluid in-between. 102 represents an image lens; 103 represents a CCD or other image sensor which converts the optical image captured by image lens into electronic signals and transmits them as output; 104 represents a preamplifier; 105 represents a camera signal processing circuit which outputs the standardized image signals after giving blanking processing, addition of synchronizing signals, gamma correction and other processing to the image signals that are output from the image sensor; 106 represents the movement vector detection circuit described in the respective embodiments of Figures 1, 7 and 9; 107 represents the system control circuit which picks up image movement vector data supplied by movement vector detection circuit 106, computes the data on the drive direction of the movable top angle prism so as to offset the movement of the image by vibration, and computes the drive amount required for correction; and 108 represents the drive circuit which drives top angle prism 101 in accordance with the data computed by system control circuit 107.

In this way, movement vectors arising from image vibration (camera vibration) is detected by the movement vector detection circuit of each said embodiment, the direction and amount of drive for the movable top angle prism are computed in accordance with these movement vectors, and vibration correction is made by the drive of the movable top angle prism.

The explanation on the mechanism of the movement vector detection circuit by itself is omitted here because it was made in the aforesaid embodiments.

Figure 11 shows an example which employs no optical correction device, but corrects the movement of image by first taking the image temporarily into the memory device and then changing the read-out range from the memory device.

The same elements as those in Figure 10 are numbered in the same way, and explanations thereof are omitted.

Image signals which are output from preamplifier 104 are converted to digital signals by A/D converter 109 and are fed into the memory device of digital signal processing circuit 110. Memory control circuit 113 controls the rate and timing of A/D conversion for the image take-up into the memory device as well as the timing and address of the write-in into the memory device. This memory control circuit 113 also controls the address and timing of read-out from the memory device.

The digital image signals that are read out from memory 110 are given various camera signal processings by camera signal processing circuit 111, are converted to analog signals by D/A conversion circuit 112, and then are output as image signals. It is also possible to set up the system in such a way that the digital signals are output as such.

Movement vector detection circuit 115 detects the movement vector caused by camera vibration, in the same way as in the embodiment of Figure 1; and the movement vector thus detected is fed to system control circuit 114, which in turn computes the direction and magnitude of the image movement, based on the movement vector detected by movement vector detection circuit 115, and then based thereon controls memory control circuit 113 and controls the memory read-out range. That is, the memory takes up in advance the image in a larger image angle than that to be output, and at the time of memory read-out, the movement is corrected by changing the range of its read-out.

In the aforesaid system, it is possible to place the camera signal processing circuit downstream of D/A converter 112 and to let it perform analog processing, but digital signal processing provides easier processing and less noise.

In this way, correction for vibration of video camera can be made by the movement vector detection circuit of the present invention. The movement vector detection circuit is not only applicable to vibration correction, but also, as movement detector, to camera panning detection and many other applications.

The present invention provides a video camera equipped with a high performance vibration correction function which has a very broad range of movement detection and is capable of detecting and making correction for both large and small movements.

## Claims

1. A movement detection device comprising:

concentration difference operation means (12, 20) for generating a concentration difference between image planes;
space gradient means (14, 16, 18, 22, 24, 30; 44, 46, 48, 50) for generating space gradients for each image plane; and
movement vector operation means (26, 28 or 42, 32, 34, 36, 38) for generating movement vectors of the image, based on the outputs of said concentration difference operation means and of said space gradient means,

characterised in that said space gradient means is adapted to generate, for each of the image planes weighted average space gradients with given predetermined weights from different image planes.

2. A device in accordance with claim 1 wherein said space gradient means comprises:

means (16, 22) for generating a first space gradient in the image plane;
means (14, 18, 24) for generating a second space gradient in a preceding image plane; and
averaging means (30) for generating a weighted average of said first and second space gradients.

3. A device in accordance with claim 1 wherein, said space gradient means comprises:

averaging means (44, 46) for generating with given predetermined weights an average concentration difference, from an image plane of interest and a preceding image plane; and
means (48, 50) for generating a space gradient for the plane of interest from the output of said averaging means.

4. A device according to any of the preceding claims, wherein said concentration difference operation means detects the time gradient of image planes between fields or frames.

5. A device according to any of the preceding claims wherein said space gradient means detects the concentration differences between successive blocks of predetermined numbers of pixels in the image plane.

6. A device according to any of the preceding claims wherein the weight given by said averaging means is greater for a preceding image plane than for a current image plane.

7. A device according to any of the preceding claims wherein said movement vector operation means outputs the aggregate total movement vector of all movement vectors in a predetermined block of the image plane.

8. A device according to claim 7, wherein said movement vector operation means comprises:

correction means (26 or 42, 28) for correcting the output of said concentration difference operation means;
absolute value operation means (32) for calculating the absolute value of the output of said averaging means (30 or 46);
first totalising means (36) for calculating the aggregate total of outputs of said absolute value operation means for said predetermined block;
second totalising means (34) for calculating the aggregate total of outputs of said concentration difference operation means as corrected by said correction means, for said predetermined block; and
division means (38) for calculating the quotient of the outputs of said first totalising means and said second totalising means.

9. A device in accordance with claim 8, wherein said correction means (26, 28) is adapted to detect the sign of the output of said space gradient operation means and correct the output of said concentration difference operation means in accordance with said sign.

10. A device in accordance with claim 8 wherein, said correction means (28, 42) is adapted to detect the sign of the output of said averaging means and correct the output of said concentration difference operation means in accordance with said sign.

11. A movement correction device comprising:

a movement detection device in accordance with any of the preceding claims; and
correction means (101, 107, 108) for optically correcting an image for movement on the basis of the output of said movement vector operation means.

12. A device in accordance with claim 11, wherein said correction means is an optical correction means which offsets the movement of an image by changing the apex angle of a photographing light axis.

13. A device according to claim 12, wherein said correction means comprises a variable apex angle prism.

14. A movement correction device comprising:

a movement detection device in accordance with any of claims 1 to 10; and
correction means (109, 110, 111, 112, 113, 114) for electronically compensating an image for movement on the basis of the output of said movement vector operation means.

15. A device in accordance with claim 14, wherein said correction means comprises memory means (110) for memorising an image of a preceding image plane, wherein said memorised image can be changed in accordance with the output of said movement vector operation means.

16. A video camera comprising:

image pickup means; and
a movement correction device in accordance with any of claims 11 to 15 for correcting an image for movement, in accordance with the output of said movement vector operation means.

## Patentansprüche

1. Bewegungserfassungseinrichtung, umfassend

   eine Konzentrationsdifferenz-Betriebseinrichtung (12, 20) zum Erzeugen einer Konzentrationsdifferenz zwischen Bildebenen; eine Flächengradienten-Einrichtung (14, 16, 18, 22, 24, 30; 44, 46, 48, 50) zum Erzeugen von Flächengradienten für jede Bildebene; und eine Bewegungsvektor-Betriebseinrichtung (26, 28 oder 42, 32, 34, 36, 38) zum Erzeugen von Bewegungsvektoren des Bilds auf der Grundlage der Ausgänge der Konzentrationsdifferenz-Betriebseinrichtung und der Flächengradienten-Einrichtung,

   dadurch gekennzeichnet, daß die Flächengradienten-Einrichtung derart ausgebildet ist, daß sie für jede der Bildebenen gewichtete mittlere Flächengradienten mit gegebenen vorbestimmten Gewichten aus unterschiedlichen Bildebenen erzeugt.

2. Einrichtung nach Anspruch 1, bei der die Flächengradienten-Einrichtung umfaßt:

   eine Einrichtung (16, 22) zum Erzeugen eines ersten Flächengradienten in der Bildebene; eine Einrichtung (14, 18, 24) zum Erzeugen eines zweiten Flächengradienten in einer vorherigen Bildebene; und eine Mittelwertbildungseinrichtung (30) zum Erzeugen eines gewichteten Mittelwerts des ersten und des zweiten Flächengradienten.

3. Einrichtung nach Anspruch 1, bei der die Flächengradienten-Einrichtung umfaßt:

   eine Mittelwertbildungseinrichtung (44, 46) zum Erzeugen - mit gegebenen vorbestimmten Gewichten - einer mittleren Konzentrationsdifferenz aus einer gegenwärtigen Bildebene und einer vorherigen Bildebene; und einer Einrichtung (48, 50) zum Erzeugen eines Flächengradienten für die gegenwärtige Bildebene aus dem Ausgang der Mittelwertbildungseinrichtung.

4. Einrichtung nach einem der vorangehenden Ansprüche, bei der die Konzentrationsdifferenz-Betriebseinrichtung den Zeitgradienten von Bildebenen zwischen Halb- oder Vollbildern erfaßt.

5. Einrichtung nach einem der vorangehenden Ansprüche, bei der die Flächengradienten-Einrichtung die Konzentrationsdifferenzen zwischen aufeinanderfolgenden Blöcken von vorbestimmten Anzahlen von Pixeln in der Bildebene erfaßt.

6. Einrichtung nach einem der vorangehenden Ansprüche, bei dem das durch die Mittelwertbildungseinrichtung gegebene Gewicht für eine vorhergehende Bildebene größer ist als für eine gegenwärtige Bildebene.

7. Einrichtung nach einem der vorangehenden Ansprüche, bei dem die Bewegungsvektor-Betriebseinrichtung den vereinigten Gesamtbewegungsvektor aller Bewegungsvektoren in einem vorbestimmten Block der Bildebene ausgibt.

8. Einrichtung nach Anspruch 7, bei dem die Bewegungsvektor-Betriebseinrichtung umfaßt:

   eine Korrektureinrichtung (26 oder 42, 28) zum Korrigieren des Ausgangs der Konzentrationsdifferenz-Betriebseinrichtung; eine Absolutwert-Betriebseinrichtung (32) zum Berechnen des Absolutwerts des Ausgangs der Mittelwertbildungseinrichtung (30 oder 46); eine erste Totalisierungseinrichtung (36) zum Berechnen der vereinigten Gesamtheit von Ausgängen der Absolutwert-Berechnungseinrichtung für den vorbestimmten Block; eine zweite Totalisierungseinrichtung (34) zum Berechnen der vereinigten Gesamtheit der Ausgänge der Konzentrationsdifferenz-Betriebseinrichtung, wie sie durch die Korrektureinheit korrigiert wurden, für den vorbestimmten Block; und eine Divisionseinrichtung (38) zum Berechnen des Quotienten der Ausgänge der ersten Totalisierungseinrichtung und der zweiten Totalisierungseinrichtung.

9. Einrichtung nach Anspruch 8, bei der die Korrektureinrichtung (26, 28) derart ausgebildet ist, daß sie das Vorzeichen des Ausgangs der Flächengradienten-Betriebseinrichtung erfaßt und den Ausgang der Konzentrationsdifferenz-Betriebseinrichtung in Übereinstimmung mit dem Vorzeichen korrigiert.

10. Einrichtung nach Anspruch 8, bei der die Korrektureinrichtung (28, 42) derart ausgebildet ist, daß sie das Vorzeichen des Ausgangs der Mittelwertbildungseinrichtung erfaßt und den Ausgang der Konzentrationsdifferenz-Betriebseinrichtung in Übereinstimmung mit dem Vorzeichen korrigiert.

**11.** Bewegungskorrektureinrichtung, umfassend:

eine Bewegungserfassungseinrichtung in Übereinstimmung mit einem der vorangehenden Ansprüche; und einer Korrektureinrichtung (101, 107, 108) zum optischen Korrigieren eines Bildes im Hinblick auf Bewegung auf der Grundlage des Ausgangs der Bewegungsvektor-Betriebseinrichtung.

**12.** Einrichtung nach Anspruch 11, bei der die Korrektureinrichtung eine optische Korrektureinrichtung ist, welche die Bewegung eines Bildes durch Ändern des Kegelwinkekels einer Photographierlichtachse versetzt.

**13.** Einrichtung nach Anspruch 12, bei der die Korrektureinrichtung ein Prisma mit variablem Kegelwinkel umfaßt.

**14.** Bewegungskorrektureinrichtung, umfassend:

eine Bewegungserfassungseinrichtung in Übereinstimmung mit einem der Ansprüche 1 bis 10; und eine Korrektureinrichtung (109, 110, 111, 112, 113, 114) zum elektronischen Kompensieren eines Bildes im Hinblick auf Bewegung auf der Grundlage des Ausgangs der Bewegungsvektor-Betriebseinrichtung.

**15.** Einrichtung nach Anspruch 14, bei dem die Korrektureinrichtung eine Speichereinrichtung (110) umfaßt zum Speichern eines Bilds einer vorhergehenden Bildebene, wobei das gespeicherte Bild in Übereinstimmung mit dem Ausgang der Bewegungsvektor-Betriebseinrichtung geändert werden kann.

**16.** Videokamera, umfassend:

eine Bildaufnahmeeinrichtung; und eine Bewegungskorrektureinrichtung nach einem der Ansprüche 11 bis 15 zum Korrigieren eines Bildes im Hinblick auf Bewegung in Übereinstimmung mit dem Ausgang der Bewegungsvektor-Betriebseinrichtung.

**Revendications**

**1.** Dispositif de détection de mouvement comprenant :

des moyens (12, 20) de calcul de différence de concentration pour générer une différence de concentration entre des plans image ; des moyens (14, 16, 18, 22, 24, 30; 44, 46, 48, 50) de détermination de gradient spatial pour générer des gradients spatiaux pour chaque plan image ; des moyens (26, 28 ou 42, 32, 34, 36, 38) de calcul de vecteur de mouvement pour générer des vecteurs de mouvement de l'image sur la base des sorties desdits moyens de calcul de différence de concentration et desdits moyens de détermination de gradient spatial,

caractérisé en ce que lesdits moyens de détermination de gradient spatial sont conçus pour générer, pour chacun des plans image, des gradients spatiaux moyens pondérés avec des poids donnés prédéterminés à partir de différents plans image.

**2.** Dispositif selon la revendication 1, dans lequel lesdits moyens de détermination de gradient spatial comprennent :

des moyens (16, 22) pour générer un premier gradient spatial dans le plan image ; des moyens (14, 18, 24) pour générer un second gradient spatial dans un plan image précédent ; et des moyens (30) de calcul de moyenne pour générer une moyenne pondérée desdits premier et second gradients spatiaux.

**3.** Dispositif selon la revendication 1, dans lequel lesdits moyens de détermination de gradient spatial comprennent :

des moyens (44, 46) de calcul de moyenne pour générer, avec des poids prédéterminés donnés, une différence de concentration moyenne à partir d'un plan image considéré et d'un plan image précédent ; et des moyens (48, 50) pour générer un gradient spatial pour le plan considéré à partir de la sortie desdits moyens de calcul de moyenne.

**4.** Dispositif selon l'une quelconque des revendications précédentes, dans lequel lesdits moyens de calcul de différence de concentration détectent le gradient temporel de plans image compris entre des champs ou des trames.

**5.** Dispositif selon l'une quelconque des revendications précédentes, dans lequel lesdits moyens de détermination de gradient spatial détectent les différences de concentration entre des blocs successifs de nombres prédéterminés de pixels dans le plan image.

**6.** Dispositif selon l'une quelconque des revendications précédentes, dans lequel le poids conféré par lesdits moyens de calcul de la moyenne est plus grand pour un plan image précédent que pour un plan image courant.

7. Dispositif selon l'une quelconque des revendications précédentes, dans lequel lesdits moyens de calcul de vecteur de mouvement fournissent en sortie le vecteur de mouvement total agrégé de tous les vecteurs de mouvement d'un bloc prédéterminé du plan image.

8. Dispositif selon la revendication 7, dans lequel lesdits moyens de calcul de vecteur de mouvement comprennent :

des moyens (26 ou 42, 28) de correction pour corriger la sortie desdits moyens de calcul de différence de concentration ;
des moyens (32) de calcul de valeur absolue pour calculer la valeur absolue de la sortie desdits moyens (30 ou 46) de calcul de moyenne ;
des premiers moyens (36) de totalisation pour calculer le total agrégé de sorties desdits moyens de calcul de valeur absolue pour ledit bloc prédéterminé ;
des seconds moyens (34) de totalisation pour calculer le total agrégé de sorties desdits moyens de calcul de différence de concentration après correction par lesdits moyens de correction, pour ledit bloc prédéterminé; et
des moyens (38) de division pour calculer le quotient des sorties desdits premiers moyens de totalisation et desdits seconds moyens de totalisation.

9. Dispositif selon la revendication 8, dans lequel lesdits moyens (26, 28) de correction sont conçus pour détecter le signe de la sortie desdits moyens de calcul de gradient spatial et corriger la sortie desdits moyens de calcul de différence de concentration en fonction dudit signe.

10. Dispositif selon la revendication 8, dans lequel lesdits moyens (28, 42) de correction sont conçus pour détecter le signe de la sortie desdits moyens de calcul de moyenne et corriger la sortie desdits moyens de calcul de différence de concentration en fonction dudit signe.

11. Dispositif de correction de mouvement comprenant :

un dispositif de détection de mouvement selon l'une quelconque des revendications précédentes ; et
des moyens (101, 107, 108) de correction pour corriger optiquement le mouvement d'une image sur la base de la sortie desdits moyens de calcul de vecteur de mouvement.

12. Dispositif selon la revendication 11, dans lequel lesdits moyens de correction sont des moyens de correction optique qui décalent le mouvement d'une image en modifiant l'angle au sommet d'un axe de lumière de photographie.

13. Dispositif selon la revendication 12, dans lequel lesdits moyens de correction comprennent un prisme à angle au sommet variable.

14. Dispositif de correction de mouvement comprenant :

un dispositif de détection de mouvement selon l'une quelconque des revendications 1 à 10 ; et
des moyens (109, 110, 111, 112, 113, 114) de correction pour compenser électroniquement le mouvement d'une image sur la base de la sortie desdits moyens de calcul de vecteur de mouvement.

15. Dispositif selon la revendication 14, dans lequel lesdits moyens de correction comprennent des moyens (110) à mémoire pour mémoriser une image d'un plan image précédent, dans lequel ladite image mémorisée peut être modifiée en fonction de la sortie desdits moyens de calcul de vecteur de mouvement.

16. Caméra vidéo comprenant:

un moyen de prise de vues ; et
un dispositif de correction de mouvement selon l'une quelconque des revendications 11 à 15 pour corriger le mouvement d'une image en fonction de la sortie desdits moyens de calcul de vecteur de mouvement.

# FIG. 1

# FIG. 2

## FIG. 3

$e(\alpha)$
(PIXEL)

ESTIMATION RESULT

$T/2$

$T/4$

$e(\alpha) = \dfrac{T}{2\pi} \sin \dfrac{2\pi}{T} \alpha$

0

$-T/4$

0   $T/4$   $T/2$   $T$

MOVEMENT AMOUNT $\alpha$
(PIXEL)

## FIG. 4

(SIMPLE AVERAGE)

$e(\alpha)$
(PIXEL)

ESTIMATION RESULT

$e(\alpha) = \dfrac{T}{\pi} \tan \dfrac{\pi}{T} \alpha$

$T/2$

$T/4$

0

$-T/4$

0   $T/4$   $T/2$   $T$

MOVEMENT AMOUNT $\alpha$
(PIXEL)

11

EP 0 454 483 B1

# FIG. 5

# FIG. 6

12

# FIG. 7

# FIG. 8

Legend:
○ AVERAGE GRADIENT METHOD
□ WEIGHTED AVERAGE GRADIENT METHOD
× CONVENTIONAL METHOD

ESTIMATION RESULT (PIXEL)

MOVEMENT AMOUNT (PIXEL)

## FIG. 9

## FIG. 10

FIG. 11

EP 0 454 483 B1